# FASCICULE DE BREVET EUROPEEN

(11) **EP 3 859 170 B1**
(45) Date de publication et mention de la délivrance du brevet: **06.12.2023**
(21) Numéro de dépôt: 21151464.1
(22) Date de dépôt: 13.01.2021
(51) Int. Cl.: F16B 5/02, F16B 43/00, F16B 35/06

(54) **BOULON COMPRENANT UN ÉCROU ET AU MOINS UNE RONDELLE OBTENUE PAR DURCISSEMENT D'UN MATÉRIAU PÂTEUX, PROCÉDÉ DE MONTAGE DUDIT BOULON ET ASSEMBLAGE COMPORTANT AU MOINS UN TEL BOULON**
BOLZEN, DER EINE MUTTER UND MINDESTENS EINE UNTERLEGSCHEIBE UMFASST, DIE DURCH HÄRTUNG EINES PASTÖSEN MATERIALS ERHALTEN WURDE, VERFAHREN ZUR MONTAGE DIESES BOLZENS UND BAUGRUPPE MIT MINDESTENS EINEM SOLCHEN BOLZEN
BOLT COMPRISING A NUT AND AT LEAST ONE WASHER OBTAINED BY HARDENING OF A PASTY MATERIAL, METHOD FOR INSTALLING SAID BOLT AND ASSEMBLY COMPRISING AT LEAST ONE SUCH BOLT

(30) Priorité: 30.01.2020 FR 2000901
(43) Date de publication de la demande: 04.08.2021
(73) Titulaire: Airbus Operations SAS, 31060 Toulouse (FR)
(72) Inventeur: CHIROL, Clément, 31060 TOULOUSE (FR); RAFIK, Vincent, 31060 TOULOUSE (FR)
(74) Mandataire: Fantin, Laurent

(56) Documents cités:
- EP-A1- 2 730 790
- WO-A1-2009/096031
- JP-A- 2005 140 314
- JP-A- 2006 153 119
- JP-A- 2008 064 309
- KR-B1- 102 004 612
- US-A- 3 550 498

## Description

La présente demande se rapporte à un boulon comprenant un écrou et au moins une rondelle obtenue par durcissement d'un matériau pâteux, à un procédé de montage dudit boulon ainsi qu'à un assemblage comportant au moins un tel boulon.

Selon un mode de réalisation de l'art antérieur, un assemblage comprend au moins deux pièces, maintenues assemblées par au moins un boulon qui comporte une vis, ainsi qu'un écrou configuré pour se visser sur la vis et prendre appui en fonctionnement contre une face de contact d'une des pièces de l'assemblage. Lors du montage, le boulon est serré de manière à exercer une précharge déterminée sur les pièces de l'assemblage.

En fonctionnement, un desserrement intempestif du boulon, en raison de la rotation de la vis ou de l'écrou, induit une perte de précharge qui affecte les performances mécaniques de l'assemblage.

Les documents US3550498, JP2008064309 et WO2009/096031 décrivent chacun un boulon qui comprend une rondelle en matériau déformable susceptible d'être comprimée de manière à pénétrer dans des formes en creux prévues au niveau de l'écrou. Pour ces trois documents, la première rondelle est en contact avec la tige filetée lorsque l'écrou est serré et peut dans le temps adhérer à la tige filetée rendant difficile un éventuel démontage ultérieur.

La présente invention vise à remédier à tout ou partie des inconvénients de l'art antérieur en proposant une solution limitant les risques de rotation de l'écrou.

A cet effet, l'invention a pour objet un boulon comprenant :
- une tige présentant un tronçon fileté en saillie par rapport à une face de contact d'une première pièce d'un assemblage en fonctionnement,
- un écrou présentant une surface périphérique extérieure, des première et deuxième faces terminales ainsi qu'un trou traversant débouchant au niveau des première et deuxième faces terminales, la première face terminale étant orientée vers la face de contact en fonctionnement et comportant au moins une forme en creux ou en saillie, le trou traversant comportant au moins une première portion taraudée configurée pour coopérer avec le tronçon fileté de la tige et permettre un vissage de l'écrou sur la tige,
- au moins une première rondelle, intercalée entre la première face terminale de l'écrou et la face de contact en fonctionnement, présentant une première face transversale orientée vers l'écrou et une deuxième face transversale orientée vers la face de contact en fonctionnement.

Selon l'invention, la première rondelle est réalisée à partir d'un matériau configuré pour occuper un premier état pâteux lui permettant de se conformer à chaque forme en creux ou en saillie de l'écrou lors d'une mise en place de l'écrou et un deuxième état solide, après durcissement du matériau, dans lequel la première face transversale de la première rondelle comprend un ergot ou une empreinte coopérant avec une forme en creux ou en saillie de l'écrou pour le bloquer en rotation par rapport à la première rondelle. En complément, le boulon comprend une deuxième rondelle, intercalée entre la première rondelle et la face de contact de la première pièce de l'assemblage en fonctionnement, la deuxième rondelle comprenant au moins une nervure intérieure positionnée à l'intérieur du trou traversant de l'écrou, en étant faiblement espacée de l'écrou, limitant une propagation du matériau de la première rondelle à l'état pâteux

Cette solution permet de limiter les risques de dévissement intempestif de l'écrou. De plus, la nervure intérieure de la deuxième rondelle empêche la matière de la première matière d'être en contact avec la tige.

Selon une autre caractéristique, chaque ergot ou empreinte de la première rondelle présente une forme complémentaire, sans jeu, à une forme en creux ou en saillie de l'écrou. Selon une autre caractéristique, la première face terminale de l'écrou comprend au moins une rainure radiale qui s'étend depuis le trou traversant jusqu'à la surface périphérique extérieure.

Selon une autre caractéristique, la première face terminale de l'écrou comprend quatre rainures radiales formant des angles de 90° entre elles.

Selon une autre caractéristique, le matériau de la première rondelle est choisi de manière à ce que la première rondelle présente, après durcissement, une adhérence élevée avec au moins une des surfaces en contact avec ses première et deuxième faces transversales.

Selon une autre caractéristique, le matériau de la première rondelle est un mastic de type PR.

Selon une autre caractéristique, la deuxième rondelle présente un chant périphérique oblong, ovale ou elliptique.

Selon une autre caractéristique, la deuxième rondelle comprend une première surface transversale, en contact avec la face de contact d'une première pièce d'un assemblage en fonctionnement, présentant un état de surface adapté pour obtenir un coefficient de frottement élevé entre la première surface transversale de la deuxième rondelle et la face de contact.

Selon une autre caractéristique, le trou traversant de l'écrou comprend une deuxième portion cylindrique et lisse, s'étendant à partir de la première face terminale de l'écrou, configurée pour loger la nervure intérieure qui présente un diamètre intérieur permettant le passage de la tige.

Selon une autre caractéristique, la deuxième rondelle comprend une nervure extérieure positionnée autour de l'écrou, en étant faiblement espacée de la surface périphérique extérieure.

Selon une autre caractéristique, la surface périphérique extérieure de l'écrou comprend au moins un tronçon extérieur cylindrique qui s'étend à partir de la première face terminale, faiblement espacé de la nervure extérieure.

L'invention a également pour objet un procédé de montage d'un boulon selon l'une des caractéristiques précédentes, caractérisé en ce que le procédé comprend une étape de mise en place d'un matériau d'une première rondelle à l'état pâteux sur une deuxième rondelle en appui contre une face de contact d'une première pièce d'un assemblage, puis une étape de vissage d'un écrou comportant une première face terminale orientée vers la face de contact et présentant au moins une forme en creux ou en saillie, le matériau de la première rondelle à l'état pâteux étant comprimé entre la première face terminale de l'écrou et la deuxième rondelle en fin de vissage de l'écrou, et enfin une étape de durcissement du matériau de la première rondelle.

L'invention a également pour objet un assemblage comprenant au moins un boulon selon l'une des caractéristiques précédentes.

D'autres caractéristiques et avantages ressortiront de la description de l'invention qui va suivre, description donnée à titre d'exemple uniquement, en regard des dessins annexés parmi lesquels :
- la figure 1 est une coupe d'un assemblage illustrant un premier mode de réalisation de l'invention,
- la figure 2 est une vue en perspective d'un écrou et de rondelles d'un boulon illustrant le premier mode de réalisation de l'invention,
- la figure3 est une vue en perspective d'un écrou illustrant le premier mode de réalisation de l'invention,
- la figure 4 est une vue de dessus d'un assemblage illustrant le premier mode de réalisation de l'invention,
- la figure 5 est une coupe selon la ligne V-V de la figure 4 de l'écrou et des rondelles,
- la figure 6 est une vue latérale d'une partie de l'assemblage visible sur la figure 4, et
- la figure 7 est une coupe d'un écrou et de rondelles d'un boulon illustrant un deuxième mode de réalisation de l'invention.

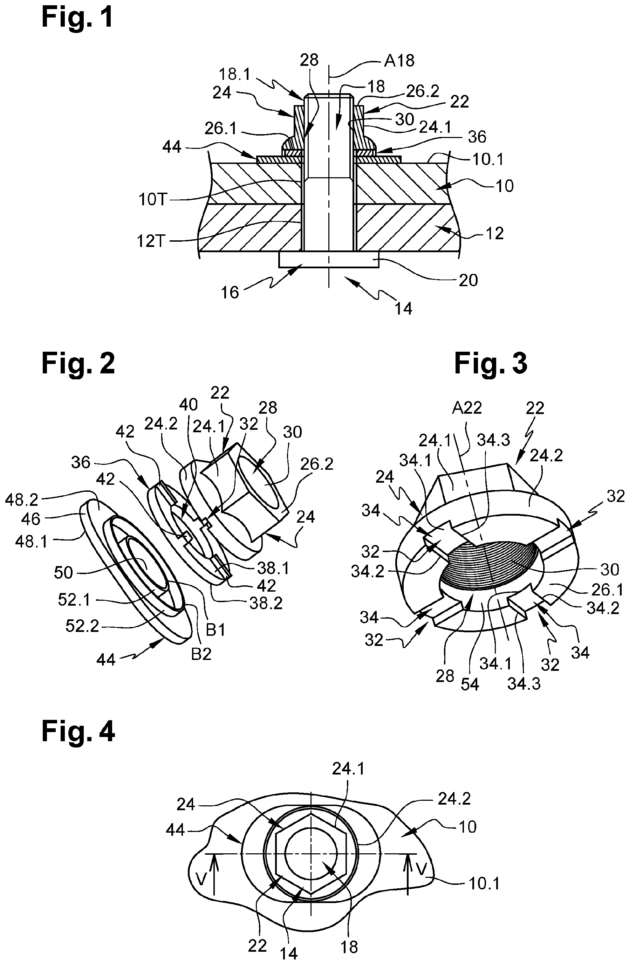

Selon un mode de réalisation visible sur les figures 1, 4 et 6, un assemblage comprend au moins des première et deuxième pièces 10, 12 ainsi qu'au moins un boulon 14 maintenant les première et deuxième pièces 10, 12 assemblées. L'assemblage peut comprendre plus de deux pièces 10, 12.

Selon une configuration, le boulon 14 comprend une vis 16 présentant une tige 18 ainsi qu'une tête 20 solidaire d'une première extrémité de la tige 18. Selon une autre configuration, le boulon 14 comprend une tige 18, sans tête, sous la forme d'un goujon, se vissant dans l'une des première et deuxième pièces 10, 12.

Quelle que soit la configuration, la tige 18 présente un tronçon fileté 18.1 en saillie par rapport à une face de contact 10.1 d'une première pièce 10 de l'assemblage en fonctionnement. Selon une configuration, le tronçon fileté 18.1 s'étend sur toute la longueur de la tige 18. Selon une autre configuration visible sur la figure 1, le tronçon fileté 18.1 ne s'étend pas sur toute la longueur de la tige 18 mais seulement sur une partie de la tige 18 en saillie par rapport à la face de contact 10.1.

En fonctionnement, la tige 18 présente un axe A18 approximativement perpendiculaire à la face de contact 10.1.

Chaque pièce 10, 12 de l'assemblage comprend un trou de passage 10T, 12T pour loger la tige 18 du boulon 14.

Le boulon 14 comprend également un écrou 22 qui présente un axe A22, une surface périphérique extérieure 24, des première et deuxième faces terminales 26.1, 26.2 ainsi qu'un trou traversant 28, coaxial à l'axe A22, débouchant au niveau des première et deuxième faces terminales 26.1, 26.2. Ces dernières sont planes et perpendiculaires à l'axe A22 de l'écrou 22.

En fonctionnement, la première face terminale 26.1 est orientée vers la face de contact 10.1 de la première pièce 10 de l'assemblage.

Le trou traversant 28 comprend au moins une première portion 30 taraudée configurée pour coopérer avec le tronçon fileté 18.1 de la tige 18 et permettre un vissage de l'écrou 22 sur la tige 18.

La surface périphérique extérieure 24 est configurée pour permettre de faire pivoter l'écrou à l'aide d'un outil. Selon une configuration, la surface périphérique extérieure 24 comprend au moins un premier tronçon extérieur 24.1 avec une section polygonale, comme une section hexagonale par exemple. Selon une configuration, la surface périphérique extérieure 24 comprend un premier tronçon extérieur 24.1 à section polygonale, qui s'étend à partir de la deuxième face terminale 26.2, ainsi qu'un deuxième tronçon extérieur 24.2 cylindrique qui présente une section supérieure au premier tronçon extérieur 24.1 à section polygonale et qui s'étend à partir de la première face terminale 26.1.

Selon un premier mode de réalisation visible sur les figures 1 à 6, l'écrou 22 comprend au moins une forme en creux 32 positionnée au niveau de la première face terminale 26.1, écartée de l'axe A22 de l'écrou 22. Selon un mode de réalisation, chaque forme en creux 32 est une rainure radiale 34, perpendiculaire à l'axe A22 de l'écrou 22, qui s'étend depuis le trou traversant 28 jusqu'à la surface périphérique extérieure 24. Selon une configuration, l'écrou 22 comprend quatre rainures radiales 34, identiques, formant des angles de 90° entre elles. Les rainures radiales 34 ont toutes la même section transversale et présentent chacune un fond 34.1 parallèle à la première face terminale 26.1 et deux chants 34.2, 34.3 parallèles entre eux.

Le boulon 14 comprend une première rondelle 36, intercalée entre l'écrou 22 et la face de contact 10.1 de la première pièce 10 de l'assemblage en fonctionnement. Cette première rondelle 36 présente une première face transversale 38.1 orientée vers l'écrou 22, une deuxième face transversale 38.2 orientée vers la face de contact 10.1 ainsi qu'un orifice de passage 40 pour loger la tige 18, débouchant au niveau des première et deuxième faces transversales 38.1, 38.2. Les première et deuxième faces transversales 38.1, 38.2 sont parallèles entre elles.

La première rondelle 36 comprend également au moins un ergot 42, saillant par rapport à la première face transversale 38.1, configuré pour se loger dans une forme en creux 32 de l'écrou 22 afin de le bloquer en rotation par rapport à la première rondelle 36.

Selon un mode de réalisation, chaque ergot 42 a une forme complémentaire à celle de la forme en creux 32 correspondante de manière à se loger sans jeu dans cette dernière. Selon une configuration, la première rondelle 36 comprend autant d'ergots 42 que de formes en creux 32 présentes sur la première face terminale 26.1 de l'écrou 22, les ergots 42 étant agencés de la même manière que les formes en creux 32. En présence de quatre rainures radiales identiques, la première rondelle 36 comprend quatre nervures (saillantes) radiales, identiques, formant des angles de 90° entre elles.

Selon une caractéristique de l'invention, la première rondelle 36 est réalisée à partir d'un matériau durcissable configuré pour occuper un premier état pâteux lui permettant de se déformer et pénétrer dans les évidements de l'écrou 22 lors de sa mise en place et un deuxième état solide, après durcissement, dans lequel le matériau ayant pénétré dans chaque forme en creux 32 forme un ergot 42 solide réalisé d'un seul tenant avec le reste de la première rondelle 36.

Selon une configuration, le matériau de la première rondelle 36 est choisi de manière à ce que la première rondelle 36 présente, après durcissement, une adhérence élevée avec au moins l'une des surfaces en contact avec ses première et deuxième faces transversales 38.1, 38.2.

Selon un mode de réalisation, la première rondelle 36 est réalisée en un mastic de type PR, polymérisable.

Selon un premier mode opératoire, le procédé de montage du boulon 14 comprend une étape de mise en place de la tige 18, une étape de mise en place, par enduction par exemple, du matériau durcissable de la première rondelle 36 à l'état pâteux sur la face de contact 10.1, autour du trou de passage 10T de la première pièce 10 de l'assemblage, puis une étape de vissage de l'écrou 22 sur la tige 18. En fin de vissage, le matériau durcissable de la première rondelle 36 est comprimé entre la face de contact 10.1 de la première pièce 10 de l'assemblage et la première face terminale 26.1 de l'écrou 22 et flue dans les formes en creux 32 de l'écrou 22. Le procédé de montage du boulon 14 comprend ensuite une étape de durcissement du matériau durcissable, par exemple par polymérisation, pour obtenir une première rondelle 36 solide pourvue d'ergots 42 également solides, réalisés d'un seul tenant avec le reste de la première rondelle 36. Lorsque la première rondelle 36 est directement en contact avec la face de contact 10.1, elle présente une adhérence élevée avec la face de contact 10.1, après durcissement, empêchant la rotation autour de la tige 18 de la première rondelle 36 par rapport à la face de contact 10.1 de la première pièce 10 de l'assemblage. Selon un mode de réalisation visible sur les différentes figures, le boulon14 comprend une deuxième rondelle 44, intercalée entre la première rondelle 36 et la face de contact 10.1 de la première pièce 10 de l'assemblage en fonctionnement.

Cette deuxième rondelle 44 est réalisée en un matériau rigide, comme un matériau métallique ou un matériau composite.

Cette deuxième rondelle 44 présente un chant périphérique 46, des première et deuxième surfaces transversales 48.1, 48.2 parallèles entre elles ainsi qu'un orifice de passage 50 pour loger la tige 18 débouchant au niveau des première et deuxième surfaces transversales 48.1, 48.2. En fonctionnement, la première surface transversale 48.1 est en contact avec la première face de contact 10.1 de la première pièce 10 de l'assemblage et la deuxième surface transversale 48.2 est orientée vers l'écrou 22.

Selon une configuration, le chant périphérique 46 est oblong, ovale, elliptique afin d'empêcher un glissement entre la deuxième rondelle 44 et la face de contact 10.1 de la première pièce 10 de l'assemblage.

Selon un mode de réalisation, la première surface transversale 48.1 de la deuxième rondelle 44 présente un état de surface adapté, par exemple gaufré, pour obtenir un coefficient de frottement élevé entre la première surface transversale 48.1 de la deuxième rondelle 44 et la face de contact 10.1 de la première pièce 10 de l'assemblage.

Selon un mode de réalisation, la deuxième rondelle 44 comprend, sur sa deuxième surface transversale 48.2, au moins une nervure limitant la propagation du matériau de la première rondelle 36 à l'état pâteux. Selon un mode de réalisation, la deuxième rondelle 44 comprend des nervures intérieure et extérieure 52.1, 52.2 circulaires, coaxiales. Chacune des nervures intérieure et extérieure 52.1, 52.2 se présente sous la forme d'un tube de faible épaisseur.

En fonctionnement, la nervure intérieure 52.1 est positionnée à l'intérieur du trou traversant 28, en étant faiblement espacée de l'écrou 22 afin d'empêcher la propagation dans le trou traversant 28 du matériau durcissable de la première rondelle 36 à l'état pâteux. Ainsi, le matériau durcissable de la première rondelle 36 n'est pas en contact avec la tige 18 permettant un éventuel démontage ultérieur. Selon une configuration, le trou traversant 28 comprend une deuxième portion 54 cylindrique et lisse, qui s'étend à partir de la première face terminale 26.1 de l'écrou 22, configurée pour loger la nervure intérieure 52.1. La nervure intérieure 52.1 présente un diamètre extérieur sensiblement égal ou très légèrement inférieur à celui de la deuxième portion 54 cylindrique et lisse du trou traversant 28. Elle présente un diamètre intérieur légèrement supérieur à celui de la tige 18 pour permettre son passage. Selon cette configuration, le jeu entre l'écrou 22 et la nervure intérieure 52.1 est si faible qu'il empêche la propagation du matériau durcissable de la première rondelle 36 à l'état pâteux.

En fonctionnement, la nervure extérieure 52.2 est positionnée autour de l'écrou 22, en étant faiblement espacée de la surface périphérique extérieure 24 afin d'empêcher la propagation, autour de l'écrou 22, du matériau durcissable de la première rondelle 36 à l'état pâteux. Ainsi, la nervure intérieure 52.2 présente un diamètre intérieur sensiblement égal ou très légèrement supérieur à celui du deuxième tronçon extérieur 24.2 cylindrique de l'écrou 22. Selon cette configuration, le jeu entre l'écrou 22 et la nervure extérieure 52.2 est si faible qu'il empêche la propagation du matériau durcissable de la première rondelle 36 à l'état pâteux.

Chacune des nervures intérieure et extérieure 52.1, 52.2 présente une hauteur (distance entre la deuxième surface transversale 48.2 et le bord supérieur B1 ou B2 de la nervure intérieure ou extérieure 52.1, 52.2) telle qu'en fonctionnement cette hauteur est supérieure à la distance séparant la deuxième surface transversale 48.2 et le fond 34.1 de chaque rainure radiale 34.

Lorsque le boulon 14 comprend une deuxième rondelle 44, le procédé de montage du boulon 14 comprend une étape de mise en place de la tige 18 et de la deuxième rondelle 44, une étape de mise en place, par enduction par exemple, du matériau durcissable de la première rondelle 36 à l'état pâteux sur la deuxième surface transversale 48.2 de la deuxième rondelle 44 entre les nervures intérieure et extérieure 52.1, 52.2, puis une étape de vissage de l'écrou 22 sur la tige 18. En fin de vissage, le matériau durcissable de la première rondelle 36 est comprimé entre la deuxième surface transversale 48.2 de la deuxième rondelle 44 et la première face terminale 26.1 de l'écrou 22 et flue dans les formes en creux 32 de l'écrou 22. Le procédé de montage du boulon 14 comprend ensuite une étape de durcissement du matériau durcissable, par exemple par polymérisation, pour obtenir une première rondelle 36 solide pourvue d'ergots 42 également solides, réalisés d'un seul tenant avec le reste de la première rondelle 36, logés chacun dans une forme en creux 32 de l'écrou 22. Après durcissement de la première rondelle 36, l'écrou 22 est immobilisé en rotation par rapport à la première rondelle 36 grâce aux ergots 42 de la première rondelle 36 logés dans les formes en creux 32 de l'écrou 22, les ergots 42 étant dimensionnés pour résister aux efforts de cisaillement produits lors du dévissage du boulon 14. La première rondelle 36 est immobilisée en rotation par rapport à la deuxième rondelle 44 grâce à l'adhérence entre les première et deuxième rondelles 36, 44 produite lors de la polymérisation du matériau durcissable de la première rondelle 36. Enfin, la deuxième rondelle 44 est immobilisée en rotation par rapport à la face de contact 10.1 de la première pièce 10 de l'assemblage grâce à la forme de la deuxième rondelle 44 et/ou à l'état de surface de sa première surface transversale 48.1.

Bien entendu, l'invention n'est pas limitée au mode de réalisation décrit.

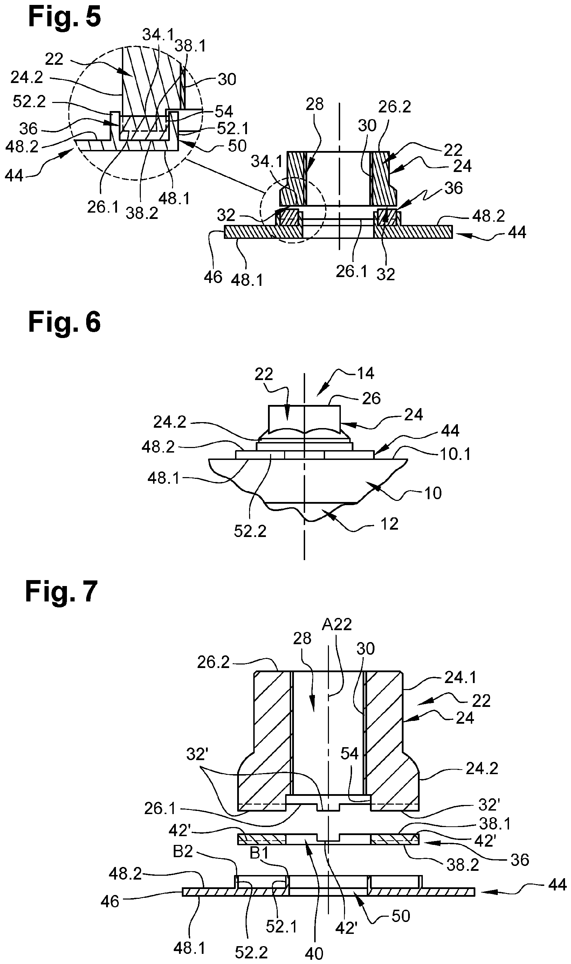

Selon un deuxième mode de réalisation visible sur la figure 7, au lieu de présenter au moins une forme en creux 32, la première face terminale 26.1 de l'écrou 22 comprend au moins une forme en saillie 32'. Selon une configuration, chaque forme en saillie 32' est une nervure radiale, perpendiculaire à l'axe A22 de l'écrou 22, qui s'étend depuis le trou traversant 28 jusqu'à la surface périphérique extérieure 24. Selon une configuration, l'écrou 22 comprend quatre nervures radiales, identiques, formant des angles de 90° entre elles. Les nervures radiales ont toutes la même section transversale et présentent chacune un sommet parallèle à la première face terminale 26.1 et deux chants parallèles entre eux.

En complément, la première rondelle 36 comprend au moins une empreinte 42', en creux par rapport à la première face transversale 38.1, coopérant avec une forme en saillie 32' de l'écrou 22 afin de le bloquer en rotation par rapport à la première rondelle 36.

Selon un mode de réalisation, chaque empreinte 42' a une forme complémentaire à celle de la forme en saillie 32' correspondante de manière à ce que chaque empreinte 32' se loge sans jeu dans une forme en creux 42'. Selon une configuration, la première rondelle 36 comprend autant d'empreintes 42' que de formes en saillie 32' présentes sur la première face terminale 26.1 de l'écrou 22, les empreintes 42' étant agencées de la même manière que les formes en saillie 32'. En présence de quatre nervures radiales identiques, la première rondelle 36 comprend quatre rainures (en creux) radiales, identiques, formant des angles de 90° entre elles.

Ainsi, quel que soit le mode de réalisation, la première face terminale 26.1 de l'écrou 22 comprend au moins une forme en creux ou en saillie 32, 32' coopérant avec un ergot ou une empreinte 42, 42' prévu€ au niveau de la première face transversale 38.1 de la première rondelle 36 afin de bloquer en rotation l'écrou 22 par rapport à la première rondelle 36, cette dernière étant obtenue par un durcissement d'un matériau dans un premier état pâteux, moulé contre la première face terminale 26.1 de l'écrou. Selon un mode de réalisation, chaque ergot ou empreinte 42, 42' de la première rondelle 36 présente une forme complémentaire, sans jeu, à une forme en creux ou en saillie 32, 32' de l'écrou 22.

## Revendications

1. Boulon comprenant une tige (18) présentant un tronçon fileté (18.1) en saillie par rapport à une face de contact (10.1) d'une première pièce (10) d'un assemblage en fonctionnement, ainsi qu'un écrou (22) présentant une surface périphérique extérieure (24), des première et deuxième faces terminales (26.1, 26.2) et un trou traversant (28) débouchant au niveau des première et deuxième faces terminales (26.1, 26.2), la première face terminale (26.1) étant orientée vers la face de contact (10.1) en fonctionnement et comportant au moins une forme en creux ou en saillie (32, 32'), le trou traversant (28) comportant au moins une première portion (30) taraudée configurée pour coopérer avec le tronçon fileté (18.1) de la tige (18) et permettre un vissage de l'écrou (22) sur la tige (18), le boulon comprenant au moins une première rondelle (36), intercalée entre la première face terminale (26.1) de l'écrou (22) et la face de contact (10.1) en fonctionnement, présentant une première face transversale (38.1) orientée vers l'écrou (22) et une deuxième face transversale (38.2) orientée vers la face de contact (10.1) en fonctionnement ; **caractérisé en ce que** la première rondelle (36) est réalisée à partir d'un matériau configuré pour occuper un premier état pâteux lui permettant de se conformer à chaque forme en creux ou en saillie (32, 32') de l'écrou (22) lors d'une mise en place de l'écrou (22) et un deuxième état solide, après durcissement du matériau, dans lequel la première face transversale (38.1) de la première rondelle (36) comprend un ergot ou une empreinte (42, 42') coopérant avec une forme en creux ou en saillie (32) de l'écrou (22) afin de le bloquer en rotation par rapport à la première rondelle (36) et **en ce que** le boulon comprend une deuxième rondelle (44), intercalée entre la première rondelle (36) et la face de contact (10.1) d'une première pièce (10) d'un assemblage en fonctionnement, la deuxième rondelle (44) comprenant au moins une nervure intérieure (52.1) positionnée à l'intérieur du trou traversant (28) de l'écrou (22), en étant faiblement espacée de l'écrou (22), limitant une propagation du matériau de la première rondelle (36) à l'état pâteux.

2. Boulon selon la revendication 1, **caractérisé en ce que** chaque ergot ou empreinte (42, 42') de la première rondelle (36) présente une forme complémentaire, sans jeu, à une forme en creux ou en saillie (32, 32') de l'écrou (22).

3. Boulon selon la revendication 1 ou 2, **caractérisé en ce que** la première face terminale (26.1) de l'écrou (22) comprend au moins une rainure radiale (34) qui s'étend depuis le trou traversant (28) jusqu'à la surface périphérique extérieure (24).

4. Boulon selon la revendication précédente, **caractérisé en ce que** la première face terminale (26.1) de l'écrou (22) comprend quatre rainures radiales (34) formant des angles de 90° entre elles.

5. Boulon selon l'une des revendications précédentes, **caractérisé en ce que** le matériau de la première rondelle (36) est choisi de manière à ce que la première rondelle (36) présente, après durcissement, une adhérence élevée avec au moins une des surfaces en contact avec ses première et deuxième faces transversales (38.1, 38.2).

6. Boulon selon l'une des revendications précédentes, **caractérisé en ce que** le matériau de la première rondelle (36) est un mastic de type PR.

7. Boulon selon l'une des revendications précédentes, **caractérisé en ce que** la deuxième rondelle (44) présente un chant périphérique (46) oblong, ovale ou elliptique.

8. Boulon selon l'une des revendications précédentes, **caractérisé en ce que** la deuxième rondelle (44) comprend une première surface transversale (48.1), en contact avec la face de contact (10.1) de la première pièce (10) de l'assemblage en fonctionnement, présentant un état de surface adapté pour obtenir un coefficient de frottement élevé entre la première surface transversale (48.1) de la deuxième rondelle (44) et la face de contact (10.1).

9. Boulon selon l'une des revendications précédentes, **caractérisé en ce que** le trou traversant (28) de l'écrou (22) comprend une deuxième portion (54) cylindrique et lisse, s'étendant à partir de la première face terminale (26.1) de l'écrou (22), configurée pour loger la nervure intérieure (52.1) qui présente un diamètre intérieur permettant le passage de la tige (18).

10. Boulon selon l'une des revendications précédentes, **caractérisé en ce que** la deuxième rondelle (44) comprend une nervure extérieure (52.2) positionnée autour de l'écrou (22), en étant faiblement espacée de la surface périphérique extérieure (24).

11. Boulon selon la revendication précédente, **caractérisé en ce que** la surface périphérique extérieure (24) de l'écrou (22) comprend au moins un tronçon extérieur (24.2) cylindrique qui s'étend à partir de la première face terminale (26.1), faiblement espacé de la nervure extérieure (52.2).

12. Procédé de montage d'un boulon selon l'une des revendications précédentes, **caractérisé en ce que** le procédé comprend une étape de mise en place d'un matériau d'une première rondelle (36) à l'état pâteux sur une deuxième rondelle (44) en appui contre une face de contact (10.1) d'une première pièce d'un assemblage, puis une étape de vissage d'un écrou (22) comportant une première face terminale (26.1) orientée vers la face de contact (10.1) et présentant au moins une forme en creux ou en saillie (32), le matériau de la première rondelle (36) à l'état pâteux étant comprimé entre la première face terminale (26.1) de l'écrou (22) et la deuxième rondelle (44) en fin de vissage de l'écrou (22), et enfin une étape de durcissement du matériau de la première rondelle (36).

13. Assemblage comprenant au moins un boulon selon l'une des revendications 1 à 11.

## Patentansprüche

1. Bolzen mit einem Schaft (18), der einen Gewindeabschnitt (18.1) aufweist, der bei Verwendung in Bezug auf eine Kontaktfläche (10.1) eines ersten Teils (10) einer Baugruppe vorsteht, sowie mit einer Mutter (22), die eine äußere Umfangsfläche (24), eine erste und eine zweite Endfläche (26.1, 26.2) und ein Durchgangsloch (28) aufweist, das in die erste und zweite Endfläche (26.1, 26.2) mündet, wobei bei der Verwendung die erste Endfläche (26.1) der Kontaktfläche (10.1) zugewandt ist, und wenigstens eine vertiefte oder vorspringende Form (32, 32') aufweist, wobei das Durchgangsloch (28) wenigstens einen ersten Abschnitt (30) mit Gewinde aufweist, der dazu eingerichtet ist, mit dem Gewindeabschnitt (18.1) des Schafts (18) zusammenzuwirken und ein Verschrauben der Mutter (22) mit dem Schaft (18) zu ermöglichen, wobei der Bolzen wenigstens eine erste Unterlegscheibe (36) aufweist, die bei der Verwendung zwischen der ersten Endfläche (26.1) der Mutter (22) und der Kontaktfläche (10.1) eingelegt ist und die und eine erste Querfläche (38.1), die bei der Verwendung zur Mutter (22) hin ausgerichtet ist, und eine zweite Querfläche (38.2) aufweist, die bei der Verwendung zur Kontaktfläche (10.1) hin ausgerichtet ist, **dadurch gekennzeichnet, dass** die erste Unterlegscheibe (36) aus einem Material hergestellt ist, das so eingerichtet ist, dass es einen ersten pastösen Zustand, in dem es sich an jede vertiefte oder vorstehende Form (32, 32') der Mutter (22) beim Anbringen der Mutter (22) anpassen kann, und einen zweiten festen Zustand nach dem Aushärten des Materials einnimmt, in dem die erste Querfläche (38.1) der ersten Unterlegscheibe (36) eine Erhöhung oder eine Vertiefung (42, 42') aufweist, die mit der vertieften oder vorstehenden Form (32) der Mutter (22) zusammenwirkt, um diese gegen Drehungen in Bezug auf die erste Unterlegscheibe (36) zu blockieren, und dass der Bolzen eine zweite Unterlegscheibe (44) aufweist, die bei der Verwendung zwischen der ersten Unterlegscheibe (36) und der Kontaktfläche (10.1) eines ersten Teils (10) einer Baugruppe eingelegt ist, wobei die zweite Unterlegscheibe (44) wenigstens einen inneren Steg (52.1) aufweist, die auf der Innenseite des Durchgangslochs (28) der Mutter (22) angeordnet ist und dabei nur wenig von der Mutter (22) beabstandet ist, wodurch eine Ausbreitung des Materials der ersten Unterlegscheibe (36) im pastösen Zustand begrenzt ist.

2. Bolzen nach Anspruch 1, **dadurch gekennzeichnet, dass** jede Erhöhung oder Vertiefung (42, 42') der ersten Unterlegscheibe (36) eine komplementäre spielfreie Form zu einer vertieften oder vorspringenden Form (32, 32') der Mutter (22) aufweist.

3. Bolzen nach Anspruch 1 oder 2, **dadurch gekennzeichnet, dass** die erste Endfläche (26.1) der Mutter (22) wenigstens eine radiale Nut (34) aufweist, die sich von dem Durchgangsloch (28) bis zur äußeren Umfangsfläche (24) erstreckt.

4. Bolzen nach dem vorhergehenden Anspruch, **dadurch gekennzeichnet, dass** die erste Endfläche (26.1) der Mutter (22) vier radiale Nuten (34) aufweist, die untereinander einen Winkel von 90° einnehmen.

5. Bolzen nach einem der vorhergehenden Ansprüche,
**dadurch gekennzeichnet, dass** das Material der ersten Unterlegscheibe (36) so gewählt ist, dass die erste Unterlegscheibe (36) nach dem Aushärten eine hohe Adhäsion mit wenigstens einer der Oberflächen aufweist, die mit ihrer ersten und zweiten Querfläche (38.1, 38.2) in Kontakt stehen.

6. Bolzen nach einem der vorhergehenden Ansprüche,
**dadurch gekennzeichnet, dass** das Material der ersten Unterlegscheibe (36) ein Kitt vom Typ PR ist.

7. Bolzen nach einem der vorhergehenden Ansprüche, **dadurch gekennzeichnet, dass** die zweite Unterlegscheibe (44) eine längliche, ovale oder elliptische Umfangskante (46) aufweist.

8. Bolzen nach einem der vorhergehenden Ansprüche, **dadurch gekennzeichnet, dass** die zweite Unterlegscheibe (44) eine erste Querschnittsfläche (48.1) aufweist, die bei der Verwendung mit der Kontaktfläche (10.1) des ersten Teils (10) der Baugruppe in Kontakt steht und eine Oberflächenbeschaffenheit aufweist, die geeignet ist, einen hohen Reibungskoeffizienten zwischen der ersten Querschnittsfläche (48.1) der zweiten Unterlegscheibe (44) und der Kontaktfläche (10.1) zu erreichen.

9. Bolzen nach einem der vorhergehenden Ansprüche, **dadurch gekennzeichnet, dass** das Durchgangsloch (28) der Mutter (22) einen zweiten zylindrischen und glatten Abschnitt (54) aufweist, der sich von der ersten Endfläche (26.1) der Mutter (22) aus erstreckt und so eingerichtet ist, dass er den inneren Steg (52.1) aufnimmt, der einen Innendurchmesser aufweist, der die Durchführung des Schafts (18) ermöglicht.

10. Bolzen nach einem der vorhergehenden Ansprüche, **dadurch gekennzeichnet, dass** die zweite Unterlegscheibe (44) einen äußeren Steg (52.2) aufweist, der um die Mutter (22) herum angeordnet ist und nur einen geringen Abstand von der äußeren Umfangsfläche (24) hat.

11. Bolzen nach dem vorhergehenden Anspruch, **dadurch gekennzeichnet, dass** die äußere Umfangsfläche (24) der Mutter (22) wenigstens einen zylindrischen Außenabschnitt (24.2) aufweist, der sich von der ersten Endfläche (26.1) aus erstreckt und einen geringen Abstand von dem äußeren Steg (52.2) hat.

12. Verfahren zur Montage eines Bolzens nach einem der vorhergehenden Ansprüche, **dadurch gekennzeichnet, dass** das Verfahren einen Schritt aufweist, in dem ein Material einer ersten Unterlegscheibe (36) im pastösen Zustand auf eine zweite Unterlegscheibe (44) aufgebracht wird, die auf einer Kontaktfläche (10.1) eines ersten Teils einer Baugruppe aufliegt, und dann einen Schritt aufweist, in dem eine Mutter (22) aufgeschraubt wird, die eine erste Endfläche (26.1), die der Kontaktfläche (10.1) zugewandt ist und wenigstens eine vertiefte oder vorspringende Form (32) aufweist, wobei das Material der ersten Unterlegscheibe (36) im pastösen Zustand zwischen der ersten Endfläche (26.1) der Mutter (22) und der zweiten Unterlegscheibe (44) am Ende des Aufschraubens der Mutter (22) zusammengedrückt wird, und schließlich einen Schritt des Aushärtens des Materials der ersten Unterlegscheibe (36) aufweist.

13. Baugruppe mit wenigstens einem Bolzen nach einem der Ansprüche 1 bis 11.

## Claims

1. Bolt comprising a stem (18) having a threaded section (18.1) protruding with respect to a contact face (10.1) of a first part (10) of an assembly in operation, and a nut (22) having an outer peripheral surface (24), first and second end faces (26.1, 26.2) and a through-hole (28) emerging at the first and second end faces (26.1, 26.2), the first end face (26.1) being oriented towards the contact face (10.1) in operation and comprising at least one hollowed or protruding form (32, 32'), the through-hole (28) comprising at least one first tapped portion (30) configured to cooperate with the threaded section (18.1) of the stem (18) and allowing the nut (22) to be screwed onto the stem (18), the bolt comprising at least one first washer (36), inserted between the first end face (26.1) of the nut (22) and the contact face (10.1) in operation, having a first transverse face (38.1) oriented towards the nut (22) and a second transverse face (38.2) oriented towards the contact face (10.1) in operation; **characterized in that** the first washer (36) is produced from a material configured to occupy a first pasty state allowing it to be shaped to each hollowed or protruding form (32, 32') of the nut (22) when the nut (22) is fitted and a second, solid state, after the hardening of the material, in which the first transverse face (38.1) of the first washer (36) comprises a stud or an imprint (42, 42') cooperating with a hollowed or protruding form (32) of the nut (22) in order to block it in rotation with respect to the first washer (36) and **in that** the bolt comprises a second washer (44), inserted between the first washer (36) and the contact face (10.1) of a first part (10) of an assembly in operation, the second washer (44) comprising at least one inner rib (52.1) positioned inside the through-hole (28) of the nut (22), and being spaced apart a little from the nut (22), limiting propagation of the material of the first washer (36) in the pasty state.

2. Bolt according to Claim 1, **characterized in that** each stud or imprint (42, 42') of the first washer (36) has a form complementing, without play, a hollowed or protruding form (32, 32') of the nut (22) .

3. Bolt according to Claim 1 or 2, **characterized in that** the first end face (26.1) of the nut (22) comprises at least one radial groove (34) which extends from the through-hole (28) to the outer peripheral surface (24).

4. Bolt according to the preceding claim, **characterized in that** the first end face (26.1) of the nut (22) comprises four radial grooves (34) forming angles of 90° between them.

5. Bolt according to one of the preceding claims, **characterized in that** the material of the first washer (36) is chosen such that the first washer (36) exhibits, after hardening, a high adhesion with at least one of the surfaces in contact with its first and second transverse faces (38.1, 38.2).

6. Bolt according to one of the preceding claims, **characterized in that** the material of the first washer (36) is a mastic of PR type.

7. Bolt according to one of the preceding claims, **characterized in that** the second washer (44) has an oblong, oval or elliptical peripheral rim (46).

8. Bolt according to one of the preceding claims, **characterized in that** the second washer (44) comprises a first transverse surface (48.1) in contact with the contact face (10.1) of the first part (10) of the assembly in operation, having a surface condition suited to obtaining a high friction coefficient between the first transverse surface (48.1) of the second washer (44) and the contact face (10.1).

9. Bolt according to one of the preceding claims, **characterized in that** the through-hole (28) of the nut (22) comprises a cylindrical and smooth second portion (54), extending from the first end face (26.1) of the nut (22), configured to house the inner rib (52.1) which has an internal diameter allowing the stem (18) to pass.

10. Bolt according to one of the preceding claims, **characterized in that** the second washer (44) comprises an outer rib (52.2) positioned around the nut (22), by being spaced apart a little from the outer peripheral surface (24).

11. Bolt according to the preceding claim, **characterized in that** the outer peripheral surface (24) of the nut (22) comprises at least one cylindrical outer section (24.2) which extends from the first end face (26.1), spaced apart a little from the outer rib (52.2).

12. Method for mounting a bolt according to one of the preceding claims, **characterized in that** the method comprises a step of placement of a material of a first washer (36) in the pasty state on a second washer (44) bearing against a contact face (10.1) of a first part of an assembly, then a step of screwing of a nut (22) comprising a first end face (26.1) oriented towards the contact face (10.1) and having at least one hollowed or protruding form (32), the material of the first washer (36) in the pasty state being compressed between the first end face (26.1) of the nut (22) and the second washer (44) at the end of screwing of the nut (22), and, finally, a step of hardening of the material of the first washer (36).

13. Assembly comprising at least one bolt according to one of Claims 1 to 11.
